# EUROPEAN PATENT SPECIFICATION

(11) **EP 1 914 933 B1**
(45) Date of publication and mention of the grant of the patent: **20.01.2010**
(21) Application number: 07254035.4
(22) Date of filing: 11.10.2007
(51) Int. Cl.: H04L 12/18

(54) **Method and apparatus for retransmission request reduction in a network**
Verfahren und Vorrichtung zur Reduktion von Wiederholungsanfragen in einem Netzwerk
Procédé et appareil pour la réduction de requêtes de retransmission dans un réseau

(30) Priority: 19.10.2006 US 583553
(43) Date of publication of application: 23.04.2008
(73) Proprietor: Ericsson AB, 164 83 Stockholm (SE)
(72) Inventor: Luciani, James, Acton Massachusetts 01720 (US)
(74) Representative: Rees, Simon John Lewis

(56) References cited:
- US-A1- 2002 040 366
- US-B1- 6 629 642
- US-B1- 6 934 752

## Description

### FIELD OF THE INVENTION

The present invention is related to retransmission request reduction in a network that supports broadcast or multicast. More specifically, the present invention is related to retransmission request reduction in a network that supports broadcast or multicast having a proxy through which retransmission requests for a packet P from set-top boxes are aggregated and a single request for retransmission of packet P is sent toward a video server by the proxy on behalf of the plurality of set-top boxes and wherein the server sends a single retransmitted packet P back toward the proxy.

### BACKGROUND OF THE INVENTION

Resilient UDP is an algorithm used by set-top boxes in an IPTV network in order to request that packets which have been lost in the IPTV network be retransmitted from the video server to the set-top box. During high traffic volume IPTV events, this mechanism causes very large amounts of both control plane and dataplane activity when one or more set top boxes detect lost packets which would occur when an upstream traffic aggregation device loses the packet. Further, this increase in control plane and data plane activity occurs at the time when packet loss is already a problem due to likely existing network congestion. Resilient UDP is used by Microsoft's U-verse IPTV offering.

US 2002/0040366 discloses a distributed network employing a system and method for intercepting a media resource request metafile client request, or a response to the media resource request by a media server in the network, and intelligently rewriting the response before sending it back to the requesting client.

US 6934752 discloses a networking protocol including definitions of quality of service enhancements to provide reliable multimedia data stream connections in wireless computer networks. These enhancements may be implemented as extensions to packet headers, such as the multimedia control field made up of various sub fields.

### BRIEF SUMMARY OF THE INVENTION

The present invention pertains to a telecommunications system. The system comprises a connectionless network for distributing content which supports broadcast or multicast. The system comprises a video server in communication with the network. The system comprises a plurality of set-top boxes in communication with the network through which the set-top boxes receive packets from the server and have communication controlled by connectionless protocols which use a request for retransmission protocol for any given lost packet P which would otherwise flow between set top box and server. The system comprises a proxy through which retransmission requests for a packet P from the set-top boxes are aggregated and a single request for retransmission of packet P is sent toward the server by the proxy on behalf of the plurality of set-top boxes and wherein the server sends a single retransmitted packet P back toward the proxy thus greatly reducing impact of retransmission protocol and packet retransmission on the network, upon reception of the packet P from the server for which the proxy acted on behalf of the plurality of set-top boxes, the proxy replicates and transmits the packet P once to and for each requesting set-top box.

The present invention pertains to a method for communicating. The method comprises the steps of receiving packets from a video server at a plurality of set-top boxes through a connectionless network for distributing content which supports broadcast or multicast and which have communication controlled by connectionless protocols which use a request for retransmission protocol for any given lost packet P which would otherwise flow between set top boxes and the server. There is the step of aggregating retransmission requests for a packet P from the set-top boxes at a proxy. There is the step of sending a single request for retransmission of packet P toward the server by the proxy on behalf of the plurality of set-top boxes. There is the step of sending by the server a single retransmitted packet P back toward the proxy thus greatly reducing impact of retransmission protocol and packet retransmission on the network. There is the step of receiving the packet P by the proxy from the server for which the proxy acted on behalf of the plurality of set-top boxes. There is the step of replicating and transmitting the packet P once to and for each requesting set-top box by the proxy.

### BRIEF DESCRIPTION OF THE SEVERAL VIEWS OF THE DRAWING

In the accompanying drawings, the preferred embodiment of the invention and preferred methods of practicing the invention are illustrated in which:

Figure 1 is a block diagram of the system of the present invention.

Figure 2 is a block diagram of the system of the present invention.

### DETAILED DESCRIPTION OF THE INVENTION

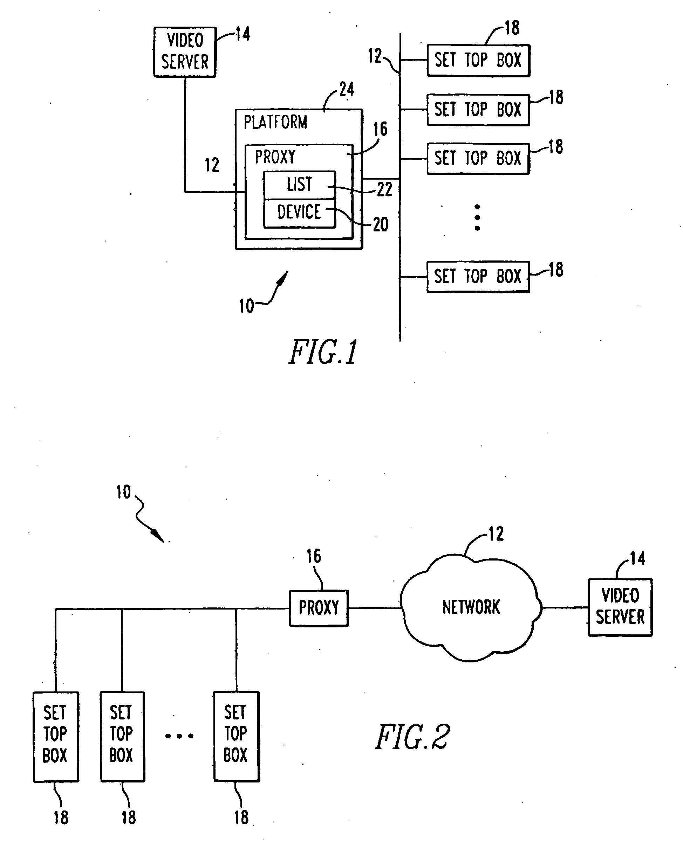

Referring now to the drawings wherein like reference numerals refer to similar or identical parts throughout the several views, and more specifically to figures 1 and 2 thereof, there is shown a telecommunications system 10. The system 10 comprises a connectionless network 12 for distributing content which supports broadcast or multicast. The system 10 comprises a video server 14 in communication with the network 12. The system 10 comprises a plurality of set-top boxes 16 in communication with the network 12 through which the set-top boxes 16 receive packets from the server 14 and have communication controlled by connectionless protocols which use a request for retransmission protocol for any given lost packet P which would otherwise flow between set top box and server 14. The system 10 comprises a proxy 18 through which retransmission requests for a packet P from the set-top boxes 16 are aggregated and a single request for retransmission of packet P is sent toward the server 14 by the proxy 18 on behalf of the plurality of set-top boxes 16 and wherein the server 14 sends a single retransmitted packet P back toward the proxy 18 thus greatly reducing impact of retransmission protocol and packet retransmission on the network 12, upon reception of the packet P from the server 14 for which the proxy 18 acted on behalf of the plurality of set-top boxes 16, the proxy 18 replicates and transmits the packet P once to and for each requesting set-top box 16.

Preferably, the network 12 carries multimedia, data, or telephony services. The connectionless protocols preferably include transport protocols with some form of reliability. The proxy 18 can include a device 20 that examines packets as they transit the device 20 but which neither the set-top boxes 16 nor the server 14 are aware of the existence of the proxy 18. Alternatively, the proxy 18 can include a device 20 which is known to be in the network 12 and wherein the set-top boxes 16 are instructed to send retransmission requests to the proxy 18 directly rather than directly to the server 14. In the latter instance, the server 14 can be unaware of the existence of the proxy 18. Preferably, the multimedia, data, or telephony services are either IPTV or Voice over IP (VoIP). The transport protocols with some form of reliability preferably include Resilient UDP.

Preferably, the proxy 18 resides in a platform 24. The proxy 18 preferably has a list 22 of the set-top boxes 16 that have requested retransmission of packet P. Preferably, the proxy 18 has a state which is associated with the list 22 and the packet P and the proxy 18 maintains the state for a predetermined period of time. The proxy 18 is preferably disposed in the network 12 inline with control and dataplane traffic.

The present invention pertains to a method for communicating. The method comprises the steps of receiving packets from a video server 14 at a plurality of set-top boxes 16 through a connectionless network 12 for distributing content which supports broadcast or multicast and which have communication controlled by connectionless protocols which use a request for retransmission protocol for any given lost packet P which would otherwise flow between set top boxes and the server 14. There is the step of aggregating retransmission requests for a packet P from the set-top boxes 16 at a proxy 18. There is the step of sending a single request for retransmission of packet P toward the server 14 by the proxy 18 on behalf of the plurality of set-top boxes 16. There is the step of sending by the server 14 a single retransmitted packet P back toward the proxy 18 thus greatly reducing impact of retransmission protocol and packet retransmission on the network 12. There is the step of receiving the packet P by the proxy 18 from the server 14 for which the proxy 18 acted on behalf of the plurality of set-top boxes 16. There is the step of replicating and transmitting the packet P once to and for each requesting set-top box 16 by the proxy 18.

Preferably, there is the step of carrying multimedia, data, or telephony services by the network 12. The receiving the packets step preferably includes the step of receiving the packets from the video server 14 at the plurality of set-top boxes 16 through the connectionless network 12 for distributing content which supports broadcast or multicast and which have communication controlled by connectionless protocols that include transport protocols with some form of reliability.

The aggregating step can include the step of aggregating retransmission requests for the packet P from the set-top boxes 16 at the proxy 18 which includes a device 20 that examines packets as they transit the device 20 but which neither the set-top boxes 16 nor the server 14 are aware of the existence of the proxy 18. Alternatively, the aggregating step can include the step of aggregating retransmission requests for the packet P from the set-top boxes 16 at the proxy 18 which includes a device 20 which is known to be in the network 12 and wherein the set-top boxes 16 are instructed to send retransmission requests to the proxy 18 directly rather than directly to the server 14. In the latter instance, the server 14 is unaware of the existence of the proxy 18. The server 14 does not need to be aware of the proxy because the proxy will use its IP address as a source address for the retransmission (this is standard proxy behavior for any a proxy). Preferably, the multimedia, data, or telephony services are either IPTV or Voice over IP (VoIP). The transport protocols with some form of reliability preferably include Resilient UDP.

In the operation of the invention, a statefull proxy 18 function is realized as follows:
1) A set top box requests a packet retransmission
2) proxy 18 acts as a (possibly but not necessarily first) hop (may or may not be IP hop but in the case where the set top boxes are aware of the proxy, the proxy is likely to be an IP hop) for the retransmission request as it is sent to the appropriate video server 14.
3) proxy 18 maintains state for a period of time for each retransmission request
   a. the proxy 18 sends the retransmission request to the appropriate video server 14
   b. when another set top requests the same retransmission, the proxy 18 does not pass the retransmission request to the server 14 but maintains a log of which set top boxes requested the lost packet
   c. when the video server 14 sends the proxy 18 the requested lost packet, the proxy 18 transmits the lost frame to each of the set top boxes that requested it
   d. the proxy 18 holds this state (the resent packet and the list 22 of set top boxes requesting it) for a period of time after which the state is released

The value of the use of such a proxy 18 function is that the entire network 12 behind the proxy 18 device 20 all the way upstream to the video server 14 is spared the impact of both the control plane activity in the form of multiple retransmission requests sent from a plethora of set top boxes and that part of the network 12 is spared the dataplane activity which results from having to retransmit the same lost frame multiple times down the distribution network 12 toward the set top boxes for each set top which requested a retransmission.

Although the invention has been described in detail in the foregoing embodiments for the purpose of illustration, it is to be understood that such detail is solely for that purpose and that variations can be made therein by those skilled in the art without departing from the spirit and scope of the invention except as it may be described by the following claims.

## Claims

1. A telecommunications system (10) comprising:
a connectionless network (12) for distributing content which supports broadcast or multicast;
a video server (14) in communication with the network;
a plurality of set-top boxes (18) in communication with the network through which the set-top boxes receive packets from the server; and
a proxy (16);
**characterized by**:
said plurality of set-top boxes adapted to (18) have communication controlled by connectionless protocols which are adapted to use a request for retransmission protocol for any given lost packet P which would otherwise flow between set top box and server; and
said proxy (16) through which retransmission requests for a packet P from the set-top boxes are aggregated and a single request for retransmission of packet P is sent toward the server by the proxy on behalf of the plurality of set-top boxes and wherein the server is adapted to send a single retransmitted packet P back toward the proxy thus greatly reducing impact of retransmission protocol and packet retransmission on the network, upon reception of the packet P from the server for which the proxy acted on behalf of the plurality of set-top boxes, the proxy is adapted to replicate and to transmit the packet P once to and for each requesting set-top box.

2. A system as described in Claim 1 wherein the network carries multimedia, data, or telephony services.

3. A system as described in Claim 2 wherein the connectionless protocols include reliable transport protocols.

4. A system as described in Claim 3 wherein the proxy includes a device (20) that examines packets as they transit the device but which neither the set-top boxes nor the server are aware of the existence of the proxy.

5. A system as described in Claim 3 wherein the proxy includes a device (20) which is known to be in the network and wherein the set-top boxes are instructed to send retransmission requests to the proxy directly rather than directly to the server.

6. A system as described in Claim 5 wherein the server is unaware of the existence of the proxy.

7. A system as described in Claim 6 wherein the multimedia, data, or telephony services is IPTV or Voice over IP (VoIP) or other media over IP.

8. A system as described in Claim 7 wherein one of said transport reliable protocols is Resilient UDP.

9. A method for communicating comprising the steps of:
receiving packets from a video server (14) at a plurality of set-top boxes (18) through a connectionless network (12) for distributing content which supports broadcast or multicast;
**characterized in that** said set-top boxes have communication controlled by connectionless protocols which use a request for retransmission protocol for any given lost packet P which would otherwise flow between set top boxes and the server;
and further comprising the steps of:
aggregating retransmission requests for a packet P from the set-top boxes at a proxy (16);
sending a single request for retransmission of packet P toward the server by the proxy on behalf of the plurality of set-top boxes;
sending by the server a single retransmitted packet P back toward the proxy thus greatly reducing impact of retransmission protocol and packet retransmission on the network;
receiving the packet P by the proxy from the server for which the proxy acted on behalf of the plurality of set-top boxes; and
replicating and transmitting the packet P once to and for each requesting set-top box by the proxy.

10. A method as described in Claim 9 including the step of carrying multimedia, data, or telephony services by the network.

11. A method as described in Claim 10 wherein the receiving the packets step includes the step of receiving the packets from the video server at the plurality of set-top boxes through the connectionless network for distributing content which supports broadcast or multicast and which have communication controlled by connectionless protocols that include reliable transport protocols.

12. A method as described in Claim 11 wherein the aggregating step includes the step of aggregating retransmission requests for the packet P from the set-top boxes at the proxy which includes a device (20) that examines packets as they transit the device but which neither the set-top boxes nor the server are aware of the existence of the proxy.

13. A method as described in Claim 11 wherein the aggregating step includes the step of aggregating retransmission requests for the packet P from the set-top boxes at the proxy which includes a device (20) which is known to be in the network and wherein the set-top boxes are instructed to send retransmission requests to the proxy directly rather than directly to the server.

14. A method as described in Claim 13 wherein the server is unaware of the existence of the proxy.

15. A method as described in Claim 14 wherein the multimedia, data, or telephony services include IPTV or Voice over IP (VoIP) or other media over IP.

16. A method as described in Claim 15 wherein one of said reliable transport protocols with is Resilient UDP.

## Patentansprüche

1. Telekommunikationssystem (10), mit:
einem verbindungslosen Netzwerk (12) zum Verteilen von Inhalt, der Broadcast oder Multicast unterstützt;
einem Videoserver (14) in Kommunikation mit dem Netzwerk;
einer Vielzahl von Settop-Boxen (18) in Kommunikation mit dem Netzwerk, über das die Settop-Boxen Pakete von dem Server empfangen; und
einem Proxy (16);
**gekennzeichnet durch**:
die Vielzahl von Settop-Boxen, die angepasst sind (18), eine Kommunikation aufzuweisen, die **durch** verbindungslose Protokolle gesteuert wird, die angepasst sind, eine Anforderung für ein Neuübertragungsprotokoll für jedes beliebige, gegebene, verlorene Paket P zu verwenden, das ansonsten zwischen Settop-Box und Server fließen würde; und
den Proxy (16), über den die Neuübertragungsanforderungen für ein Paket P von den Settop-Boxen aggregiert werden und eine einzelne Anforderung zur Neuübertragung von Paket P zu dem Server durch den Proxy in Vertretung der Vielzahl von Settop-Boxen gesendet wird, und wobei der Server angepasst ist, ein einzelnes neuübertragenes Paket P zurück zu dem Proxy zu senden, wodurch der Einfluss eines Neuübertragungsprotokolls und einer Paketneuübertragung auf das Netzwerk bei weitem verringert wird, auf Empfang des Pakets P von dem Server hin, für den der Proxy in Vertretung der Vielzahl von Settop-Boxen gehandelt hat, wobei der Proxy angeordnet ist, das Paket einmal zu und für jede anfordernde Settop-Box zu replizieren und zu überragen.

2. System nach Anspruch 1, wobei das Netzwerk Mulitimedia-, Daten-, oder Telefondienste trägt.

3. System nach Anspruch 2, wobei die verbindungslosen Protokolle zuverlässige Transportprotokolle einschließen.

4. System nach Anspruch 3, wobei der Proxy ein Gerät (20) einschließt, das Pakete prüft, wenn diese das Gerät überträgt, aber das weder die Settop-Boxen noch der Server sich der Existenz des Proxy bewusst sind.

5. System nach Anspruch 3, wobei der Proxy ein Gerät (20) einschließt, von dem bekannt ist, dass es sich in dem Netzwerk befindet und wobei die Settop-Boxen angewiesen werden, Neuübertragungsanforderungen zu dem Proxy direkt als direkt zu dem Server zu senden.

6. System nach Anspruch 5, wobei der Server sich nicht der Existenz des Proxy bewusst ist.

7. System nach Anspruch 6, wobei die Multimedia-, Daten-, und Telefondienste IPTV oder Voice-over-IP (VoIP) oder andere Medien über IP sind.

8. System nach Anspruch 7, wobei eines der zuverlässigen Transportprotokolle Resilient-UDP ist.

9. Verfahren zum Kommunizieren mit den Schritten:
Empfangen von Paketen von einem Video-Server (14) an einer Vielzahl von Settop-Boxen (18) durch ein verbindungsloses Netzwerk (12) zum Verteilen von Inhalt, der Broadcast oder Multicast unterstützt;
**dadurch gekennzeichnet, dass** die Settop-Boxen eine Kommunikation aufweisen, die durch verbindungslose Protokolle gesteuert wird, die eine Anforderung für ein Neuübertragungsprotokoll für jedes beliebige, gegebene, verlorene Paket P verwenden, das ansonsten zwischen Settop-Box und Server fließen würde;
und weiter mit den Schritten:
Aggregieren von Neuübertragungsanforderungen für ein Paket P von den Settop-Boxen an einem Proxy (16);
Senden einer einzelnen Anforderung zur Neuübertragung von Paket P zu dem Server durch den Proxy in Vertretung der Vielzahl von Settop-Boxen;
Senden durch den Server eines einzelnen, neuübertragenen Pakets P zurück zu dem Proxy, wodurch der Einfluss eines Neuübertragungsprotokolls und einer Paketneuübertragung auf das Netzwerk bei weitem verringert wird,
Empfangen des Paketes P durch den Proxy von dem Server, für den der Proxy in Vertretung der Vielzahl von Settop-Boxen gehandelt hat; und
Replizieren und Übertragen des Pakets P einmal zu und für jede anfordernde Settop-Box durch den Proxy.

10. Verfahren nach Anspruch 9, einschließlich des Schrittes eines Tragens von Multimedia-, Daten-, oder Telefondiensten durch das Netzwerk.

11. Verfahren nach Anspruch 10, wobei der Schritt des Empfangens von Paketen den Schritt eines Empfangens der Pakete von dem Video-Server an der Vielzahl von Settop-Boxen durch das verbindungslose Netzwerk zum Verteilen von Inhalt einschließt, der Broadcast oder Multicast unterstützt und die eine Kommunikation aufweisen, die durch verbindungslose Protokolle gesteuert werden, die zuverlässige Transportprotokolle einschließen.

12. Verfahren nach Anspruch 11, wobei der aggregierende Schritt den Schritt eines Aggregierens von Neuübertragungsanforderungen für das Paket P von den Settop-Boxen an dem Proxy einschließt, der ein Gerät (20) einschließt, das Pakete prüft, wenn diese das Gerät überträgt, aber das weder die Settop-Boxen noch der Server sich der Existenz des Proxy bewusst sind.

13. Verfahren nach Anspruch 11, wobei der aggregierende Schritt den Schritt eines Aggregierens von Neuübertragungsanforderungen für das Paket P von den Settop-Boxen an dem Proxy einschließt, der ein Gerät (20) einschließt, von dem bekannt ist, dass es sich in dem Netzwerk befindet und wobei die Settop-Boxen angewiesen werden, Neuübertragungsanforderungen zu dem Proxy direkt als direkt zu dem Server zu senden.

14. Verfahren nach Anspruch 13, wobei der Server sich nicht der Existenz des Proxy bewusst ist.

15. Verfahren nach Anspruch 14, wobei die Multimedia-, Daten- und Telefondienste IPTV oder Voice-over-IP (VoIP) oder andere Medien über IP sind.

16. Verfahren nach Anspruch 15, wobei eines der zuverlässigen Transportprotokolle mit Resilient-UDP ist.

## Revendications

1. Système de télécommunications (10) comprenant :
un réseau sans connexion (12) destiné à distribuer des contenus qui supportent la diffusion générale ou la diffusion multiple ;
un serveur vidéo (14) en communication avec le réseau ;
une pluralité de boîtiers décodeurs (18), en communication avec le réseau, grâce auquel les boîtiers décodeurs reçoivent des paquets du serveur ; et
un serveur mandataire (16) ;
**caractérisé en ce que** :
ladite pluralité de boîtiers décodeurs (18) est conçue pour que la communication soit commandée par des protocoles sans connexion qui sont conçus pour utiliser un protocole de demande de ré-émission pour tout paquet P perdu considéré qui circulerait sinon entre le boîtier décodeur et le serveur ; et
ledit serveur mandataire (16) regroupe les demandes de ré-émission d'un paquet P provenant des boîtiers décodeurs et une demande unique de ré-émission du paquet P est envoyée au serveur par le serveur mandataire, pour le compte de la pluralité de boîtiers décodeurs et dans lequel le serveur est conçu pour envoyer un paquet ré-émis P unique vers le serveur mandataire, ce qui réduit grandement l'impact du protocole de ré-émission et de la ré-émission de paquets sur le réseau et à réception en provenance du serveur du paquet P pour lequel le serveur mandataire a agi pour le compte de la pluralité de boîtiers décodeurs, le serveur mandataire est conçu pour dupliquer et émettre le paquet P une fois vers chacun des boîtiers décodeurs demandeurs.

2. Système selon la revendication 1, dans lequel le réseau transporte du multimédia, des données ou des services téléphoniques.

3. Système selon la revendication 2, dans lequel les protocoles sans connexion comprennent des protocoles de transport fiables.

4. Système selon la revendication 3, dans lequel le serveur mandataire comprend un dispositif (20) qui examine les paquets tandis qu'ils traversent le dispositif mais ni les boîtiers décodeurs ni le serveur ne connaissent l'existence du serveur mandataire.

5. Système selon la revendication 3, dans lequel le serveur mandataire comprend un dispositif dont il est connu qu'il se trouve sur le réseau et dans lequel il est ordonné aux boîtiers décodeurs d'envoyer les demandes de ré-émission au serveur mandataire directement plutôt que directement au serveur.

6. Système selon la revendication 5, dans lequel le serveur n'est pas informé de l'existence du serveur mandataire.

7. Système selon la revendication 6, dans lequel le multimédia, les données ou les services téléphoniques sont l'IPTV ou la voix sur IP (VoIP) ou d'autres médias sur IP.

8. Système selon la revendication 7, dans lequel l'un desdits protocoles de transport fiables est le protocole UDP fiable (pour « *Reliable UDP* »).

9. Procédé de communication, comprenant l'étape consistant à :
sur une pluralité de boîtiers décodeurs (18), recevoir des paquets d'un serveur vidéo (14) via un réseau sans connexion (12) destiné à la distribution de contenus qui supportent la diffusion générale ou la diffusion multiple ;
**caractérisé en ce que** la communication desdits boîtiers décodeurs est commandée par des protocoles sans connexion qui utilisent un protocole de demande de ré-émission pour tout paquet P perdu considéré qui circulerait sinon entre les boîtiers décodeurs et le serveur ;
et comprenant en outre les étapes consistant à :
sur un serveur mandataire (16), regrouper des demandes de ré-émission d'un paquet P provenant des boîtiers décodeurs ;
envoyer au serveur une unique demande de ré-émission du paquet P, par le serveur mandataire, pour le compte de la pluralité de boîtiers décodeurs ;
envoyer par le serveur un unique paquet P ré-émis vers le serveur mandataire, ce qui réduit grandement l'impact sur le réseau du protocole de ré-émission et de la ré-émission des paquets ;
recevoir par le serveur mandataire, en provenance du serveur, le paquet P pour lequel le serveur mandataire a agi pour le compte de la pluralité de boîtiers décodeurs ; et
dupliquer et émettre une fois par le serveur mandataire le paquet P vers chacun des boîtiers décodeurs demandeurs.

10. Procédé selon la revendication 9, comprenant en outre l'étape consistant à transporter par le réseau du multimédia, des données ou des services téléphoniques.

11. Procédé selon la revendication 10, dans lequel l'étape de réception des paquets comprend l'étape consistant à recevoir les paquets du serveur vidéo au niveau de la pluralité de boîtiers décodeurs, via le réseau sans connexion destiné à distribuer des contenus qui supportent la diffusion générale ou la diffusion multiple, et dont la communication est commandée par des protocoles sans connexion qui comprennent des protocoles de transport fiables.

12. Procédé selon la revendication 11, dans lequel l'étape de regroupement comprend l'étape consistant à regrouper des demandes de ré-émission pour le paquet P provenant des boîtiers décodeurs au niveau du serveur mandataire, celui-ci comprenant un dispositif (20) qui examine les paquets tandis qu'ils traversent le dispositif, mais ni les boîtiers décodeurs ni le serveur ne connaissent l'existence du serveur mandataire.

13. Procédé selon la revendication 11, dans lequel l'étape de regroupement comprend l'étape de regroupement des demandes de ré-émission du paquet P en provenance des boîtiers décodeurs, au niveau du serveur mandataire qui comprend un dispositif (20) dont la présence sur le réseau est connue et dans lequel il est ordonné aux boîtiers décodeurs d'envoyer les demandes de ré-émission au serveur mandataire directement plutôt que directement au serveur.

14. Procédé selon la revendication 13, dans lequel le serveur n'est pas informé de l'existence du serveur mandataire.

15. Procédé selon la revendication 14, dans lequel le multimédia, les données ou les services téléphoniques sont l'IPTV, la voix sur IP (VoIP) ou d'autres médias sur IP.

16. Procédé selon la revendication 15, dans lequel l'un desdits protocoles de transport fiables est le protocole UDP fiable.
